# EUROPEAN PATENT APPLICATION

(11) **EP 2 426 926 A2**
(43) Date of publication of application: **07.03.2012**
(21) Application number: 11179653.8
(22) Date of filing: 31.08.2011
(51) Int. Cl.: H04N 9/31

(54) **Image display apparatus**

(30) Priority: 02.09.2010 JP 2010196384
(71) Applicant: Panasonic Corporation, Kadoma-shi Osaka 571-8501 (JP)
(72) Inventor: Enomoto, Hirofumi, Osaka-shi, Osaka, 540-6207 (JP); Suyama, Kohei, Osaka-shi, Osaka, 540-6207 (JP); Teshima, Yoshihiro, Osaka-shi, Osaka, 540-6207 (JP); Jikuya, Nobuo, Osaka-shi, Osaka, 540-6207 (JP); Sato, Kaoru, Osaka-shi, Osaka, 540-6207 (JP)
(74) Representative: Eisenführ, Speiser & Partner

(57) **Abstract**

Provided is an image display apparatus (10) that has: a case (11) distinguished into a plurality of regions (S,T,U) and has a projection port (33); an image display apparatus main body (100) hat projects an image from the projection port; and a controller (22) that electrically connects to the image display apparatus main body and to an external electronic device, and is positioned so as to straddle on the plurality of regions. The case (11) has: a first region (S) that houses a first portion of the controller and is held by the electronic device at least at one portion of the region; a second region (T) positioned away from the electronic device so as to sandwich the first region and houses the image display apparatus main body; and a third region (U) positioned away from the projection port and away from the electronic device so as to sandwich the first region, and houses a second portion of the controller. Therefore, the image display apparatus can be made compact to be installed within an electronic device.

## Description

### BACKGROUND OF THE INVENTION

### Field of the Invention

The present invention relates to an image display apparatus in which a laser light source apparatus using a semiconductor laser is incorporated.

### Description of Related Art

In recent years, laser light has drawn attention as a light source of an image display apparatus which can perform large-screen display, and technology development of a semiconductor laser has been promoted to form this laser light. Compared with a ultra-high pressure mercury lamp (UHP lamp) conventionally used as a light source of an image display apparatus or a light-emitting diode (LED) recently used in a small-sized image display apparatus, a light source using a semiconductor laser light source has advantages including good color reproducibility, instant light up, long life, and high efficiency in electrical/optical conversion.

Hereinafter, a conventional laser light source apparatus will be explained. As described in Japanese Patent Application Publication No. 2010-32796, for example, the conventional light source apparatus has a red color laser light source, a blue color laser light source, and a green color laser light source as short-wavelength laser light sources which consecutively emit red color (R) laser light, blue color (B) laser light, and green color (G) laser light, respectively. The red color laser light source and the blue color laser light source are semiconductor lasers which emit red color laser light and blue color laser light, respectively. The green color laser light source has a structure in which wavelength conversion is performed to laser light of the semiconductor laser so as to emit green color laser light.

The above-described conventional image display apparatus uses three color laser light as light sources, and projects images having good color reproducibility. In the conventional image display apparatus, however, cannot be operated unless the power source is secured by itself. Accordingly, the conventional image display apparatus need to be connected to a commercial power outlet or the like via a supply power line.

Further, the conventional image display apparatus projects an image for display, controlled by an electronic device. Therefore, the electronic device transmits information of the image. Therefore, the conventional image display apparatus and the electronic device need to be connected through a line, for example.

However, if the image display apparatus is installed in the electronic device in order to remove wires connected to electronic source from commercial power outlets, heat generated by the image display apparatus would retain because it prevents heat dissipation that the image display apparatus is positioned close to the electronic device. Thus, there is a problem that it is difficult to achieve both handiness for easily operating and carrying them without wires and improvement of radiation efficiency.

### SUMMARY OF THE INVENTION

An advantage of the present invention is to provide an image display apparatus that compact enough to be installed in an electronic device.

The image display apparatus according to the present invention is proposed as defined in claim 1.

Accordingly, white the image display apparatus can be installed in the electronic device without receiving electronic source from commercial power outlets, heating areas, that is, both the image display apparatus main body and the exhaust port can be kept away from the electronic device. Thus, the image display apparatus can achieve both handiness for easily operating and carrying them without wires and improvement of radiation efficiency.

Another aspect of the present invention is to position three regions in the case. Accordingly, the case is distinguished into a plurality of regions and the controller is positioned so as to straddle on the plurality of regions. The case including: a first region that houses a first portion of the controller and that is held by the electronic device at least at one portion of the region; a second region that is positioned away from the electronic device so as to sandwich the first region and that houses the image display apparatus main body; and a third region that is positioned away from the electronic device so as to sandwich the first region and that houses a second portion of the controller.

Accordingly, since the electronic device holds at least a portion of the first region, the image display apparatus is held by the electronic device. The second and third regions positioned beyond the first region away from the electronic device protrude outside the electronic device. Therefore, the image display apparatus main body provided in the second region can project an image from the projection port of the second region.

The controller is positioned so as to straddle on the first and third regions, thereby effectively utilizing the space inside the image display apparatus. Accordingly, the image display apparatus can be made compact.

Another aspect of the present invention is to adjust the projection angle of the image display apparatus, i.e., to adjust the position if the image to be projected. Accordingly, the second region of the case rotates in a direction perpendicular to a direction to which the image display apparatus may body projects an image.

Another aspect of the present invention is to distance the projection port and the electronic device so that the image display apparatus is inhibited from projecting an image on the electronic device. Specifically, when the image display apparatus projects an image on a screen or the like, the electronic device is inhibited from casting a shadow on the image. Accordingly, the projection port is provided in the second region close to a surface opposite to an electric device side of the case, away from the first region.

Another aspect of the present invention is to promote heat dissipation of the image display apparatus main body, specifically, to inhibit an adverse effect on the electronic device caused by generated heat of the image display apparatus main body transferring to the electronic device. Accordingly, the image display apparatus comprises heat dissipating portion that dissipates heat of the image display apparatus main body. Further, at least one portion of the heat dissipating portion of the image display apparatus main body is positioned in the cooling air passage.

Another aspect of the present invention is to promote heat dissipation of the image display apparatus main body, by having an air blower that intakes air from the air inlet port and releasing the air to the cooling air passage. Since the air blower and the air inlet port are provided in the third region, the air blower takes in the air from outside the image display apparatus. Accordingly, the image display apparatus includes: an air blower provided in the cooling air passage and is housed in the third region, and wherein the air inlet port is provided in a direction perpendicular to a surface direction of the air blower.

Another aspect of the present invention is to secure a space in the third region toward the first region side, so that the controller can utilize the space and be positioned straddling on the first and third regions. Accordingly, the air blower is provided in the third region close to a surface opposite to an electric device side of the case, away from the first region.

Preferred embodiments are defined in the dependent claims.

### BRIEF DESCRIPTION OF THE DRAWINGS

The present invention is further described in the detailed description which follows, in reference to the noted plurality of drawings by way of non-limiting examples of exemplary embodiments of the present invention, in which like reference numerals represent similar parts throughout the several views of the drawings, and wherein:
Fig. 1 is a schematic perspective view of a main body of an image display apparatus according to embodiment 1 of the present invention;
Fig. 2 is a schematic perspective view of the image display apparatus according to the embodiment 1 of the present invention;
Fig. 3 is a schematic perspective view of a tilted state of the image display apparatus according to the embodiment 1 of the present invention;
Fig. 4 illustrates an example where the image display apparatus according to the embodiment 1 of the present invention is incorporated in an electronic device;
Fig. 5 is a schematic perspective view illustrating an internal configuration of the image display apparatus according to the embodiment 1 of the present invention;
Fig. 6 illustrates an example of a cooling air passage of the image display apparatus according to the embodiment 1 of the present invention;
Fig. 7 illustrates a relationship between the temperature and the output of the laser light source apparatuses of the respective colors according to the present invention;
Fig. 8 illustrates a case of the image display apparatus according to the embodiment 1 of the present invention, where the case is divided into three regions; and
Fig. 9 illustrates an example of a cooling air passage of the image display apparatus according to embodiment 2 of the present invention.

### DETAILED DESCRIPTION OF THE INVENTION

The particulars shown herein are by way of example and for purposes of illustrative discussion of the embodiments of the present invention only and are presented in the cause of providing what is believed to be the most useful and readily understood description of the principles and conceptual aspects of the present invention. In this regard, no attempt is made to show structural details of the present invention in more detail than is necessary for the fundamental understanding of the present invention, the description is taken with the drawings making apparent to those skilled in the art how the forms of the present invention may be embodied in practice.

### Embodiment 1

Hereinafter, embodiment 1 of the present invention will be explained with reference to the drawings.

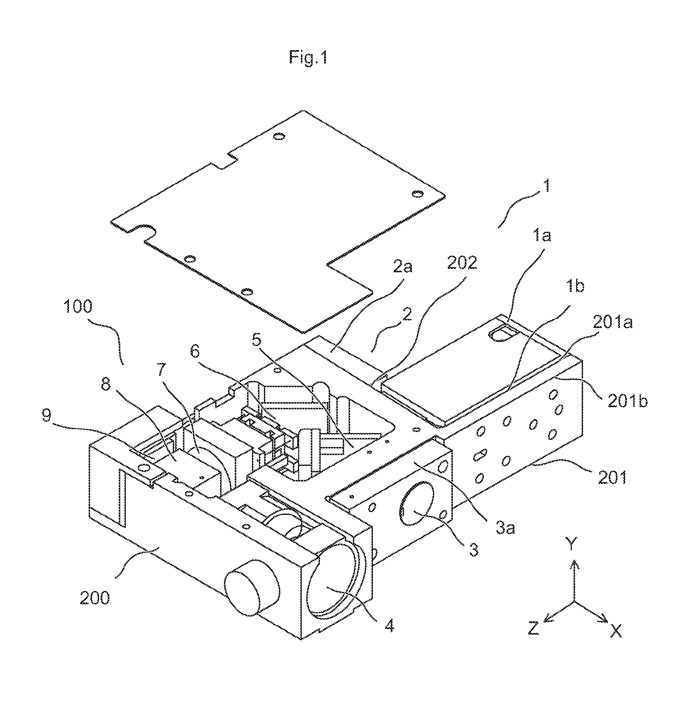

First, the configuration of the image display apparatus main body will be explained with reference to Fig. 1. Fig. 1 is a schematic perspective view of the image display apparatus main body according to the embodiment 1 of the present invention.

In Fig. 1, the image display apparatus main body 100 uses laser light as a light source and performs magnification and projection on the screen. The image display apparatus main body 100 has three light sources, that is, a green color laser light source apparatus 1, a red color laser light source apparatus 2, and a blue color laser light source apparatus 3. The image display apparatus main body 100 displays an image with the three-color laser light source apparatuses 1-3.

The green color laser light source apparatus 1 mainly outputs green color laser light by converting non-visible infrared fundamental laser light to a half wavelength. A green color laser holder 1a is a case for the green color laser light source apparatus 1, and fixes each element (for example, a semiconductor laser that outputs infrared fundamental laser light, and the like) that is accommodated in the green color laser holder 1 a.

The red color laser light source apparatus 2 outputs red color laser light, and a red color laser holder 2a is a case for the red color laser light source apparatus 2. The red color laser holder 2a retains a semiconductor laser that outputs red color laser light.

The blue color laser light source apparatus 3 outputs blue color laser light, and a blue color laser holder 3a is a case for the blue color laser light source apparatus 3. The blue color laser holder 3a retains a semiconductor laser that outputs blue color laser light.

[Here, the position arrangement of the green color laser light source apparatus 1, the red color laser light source apparatus 2, and the blue color laser light source apparatus 3 will be described in detail. The blue color laser light source apparatus 3 is provided in a plane of a main body case 200 where a projecting lens 4 is retained, and laser light from the blue color laser light source apparatus 3 is guided inside the main body case 200.

The green color laser light source apparatus 1 and the red color laser light source apparatus 2 are provided in a plane perpendicular to the plane, where the projecting lens 4 and the blue color laser light source apparatus 3 are provided, on a side of the blue color laser light source apparatus 3.

The main body case 200 has a protrusion 201 so as to extend the plane where the projecting lens 4 and the blue color laser light source apparatus 3 are provided in a direction where the green color laser light source apparatus 1 is provided. In other words, the protrusion 201 is provided integrally with the main body case 200 on a corner of the main body case 200. Although the protrusion 201 may be provided as a separate member from the main body case 200, it is preferable that the protrusion 201 is provided integrally with the main body case 200 because heat dissipation can be facilitated.

A fixing plane 1 b of the green color laser holder 1 a is arranged to contact a plane 201a of the protrusion 201. Elements such as an SHG (second harmonic generation) element, a semiconductor laser, and the like, inside the green color laser light source apparatus 1 are fixed to the fixing plane 1b of the green color laser holder 1 a. The plane 201 a is a plane that contacts the fixing plane 1 b in the protrusion 201.

The green color laser light source apparatus 1 does not contact a plane 202 of the main body case 200 so as not to directly transfer heat to the plane 202 of the main body case 200, and a predetermined gap (0.5 mm or less in this embodiment) is provided. Further, since the red color laser light source apparatus 2 requires about 0.3 mm as an optical axis adjustment range, the distance between the green color laser light source apparatus 1 and the red color laser light source apparatus 2 is 0.3 mm or more.

The reason why the predetermined gap is set to be 0.5 mm or less in this embodiment is as follows. When the predetermined gap increases, the entire image display apparatus becomes large, or the distance between the green color laser light source apparatus 1 and a collimator lens (not shown in the drawing) increases, which causes the use efficiency of light to be deteriorated by diffusion of green color laser light before reaching the collimator lens.

With this, as described below, it is possible to make it difficult for heat from the green color laser light source apparatus 1 to be transferred to the red color laser light source apparatus 2. Consequently, the red color laser light source apparatus 2 having poor temperature characteristics can be used stably.

A dichroic mirror 5 as a light path guide and a dichroic mirror 6 as a light path guide are configured by forming a film that transfers or reflects laser light of a predetermined wavelength on the surface thereof.

A field lens 7 converts the diffused laser light into a converging laser. A PBS 8 (Polarized Beam Splitter) reflects laser light of the respective colors, and directs it to a spatial modulation element 9.

The spatial modulation element 9 adjusts deflection of the laser light of the respective colors to form images. The spatial modulation element 9 used in this embodiment is reflective liquid crystal.

A large-screen image is projected after passing through the projecting lens 4.

The laser light of the respective colors from the laser light source apparatuses 1-3 of the respective colors is collimated by each collimator lens. The collimated laser light of the respective colors is directed toward a diffusing plate by the dichroic mirrors 5 and 6; travels through the diffusing plate, the field lens 7, and the PBS 8 in this order; is reflected on the spatial modulation element 9; and is magnified and projected on a screen by the projecting lens 4.

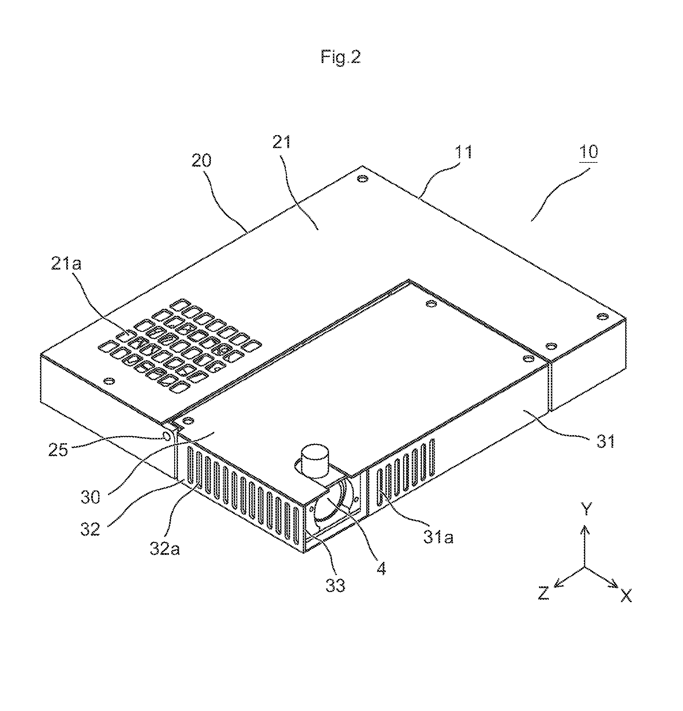

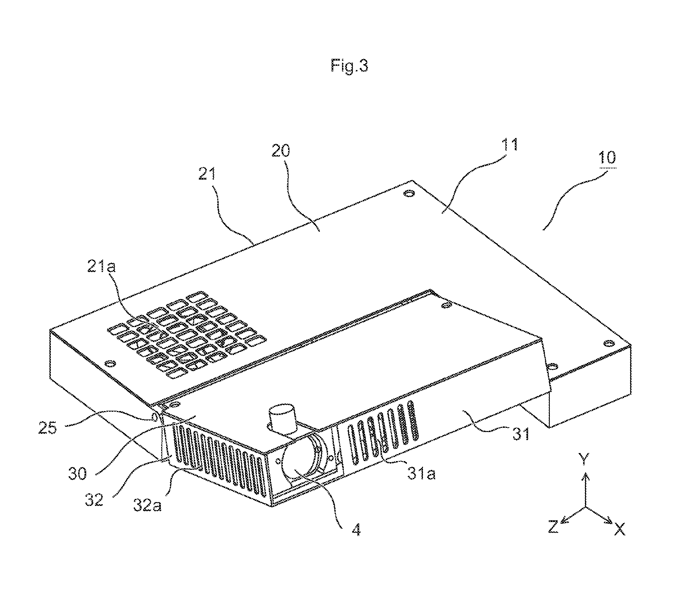

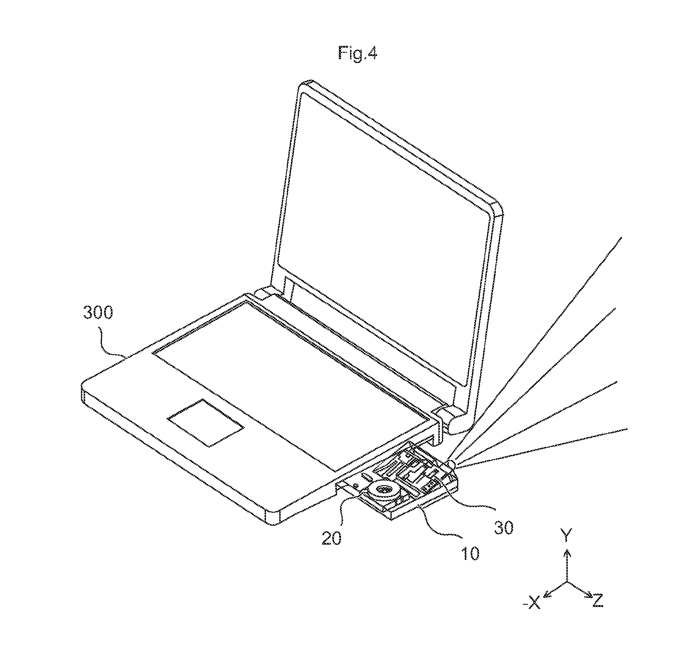

Next, the summary of the image display apparatus according to the present invention will be explained with reference to Figs. 2-4. Fig. 2 is a schematic perspective view of the image display apparatus according to the embodiment 1 of the present invention. Fig. 3 is a schematic perspective view of a tilted state of the image display apparatus according to the embodiment 1 of the present invention. Fig. 4 illustrates an example where the image display apparatus according to the embodiment 1 of the present invention is incorporated in an electronic device.

The image display apparatus 10 has a case 11 that has a fixed portion 20 and a tilted portion 30. The fixed portion 20 accommodates a control base, a cooling fan, and the like. An upper surface 21 of the fixed portion 20 is formed in a key shape, and has a plurality of air inlet ports 21 a. The cooling fan is provided below the air inlet ports 21 a (in a vertical direction of the air inlet ports 21 a, that is, a negative direction of arrow Y).

The tilted portion 30 accommodates the above-described image display apparatus main body 100. The tilted portion 30 also accommodates fins, and the like, described below. A side surface 31 of the tilted portion 30 has a plurality of exhaust ports 31a, and a side surface 32 of the tilted portion 30 has a plurality of exhaust ports 32a. The tilted portion 30 has a projection port 33 to project images, and the projecting lens 4 is exposed outside the image display apparatus 10 from the projection port 33.

The cooling fan accommodated in the fixed portion 20 takes in outside air from the air inlet ports 21 a and exhausts the air from exhaust ports 31 a and 32a. Cooling air passages, described below, are formed between the air inlet ports 21 a, and the exhaust ports 31 a and 32a. Heat dissipating portions of the laser light source apparatuses 1-3 of the respective colors, accommodated in the tilted portion 30, are interposed in the cooling air passages, thereby promoting heat dissipation of the laser light source apparatuses 1-3 of the respective colors. Here, the air inlet ports 21a side of the cooling air passage is upstream, and the exhaust ports 31 a and 32a side of the cooling air passage is downstream.

The air inlet port 21 a, the exhaust port 31 a and the exhaust port 32a may be plural or singular. The shape of the air inlet port 21 a, the exhaust port 31 a and the exhaust port 32a may be circular, oval, or polygonal, and it is not limited to a particular shape.

As shown in Fig. 3, the tilted portion 30 is rotatable relative to the fixed portion 20 around a hinge portion (rotation axis) 25. In sum, the tilted portion 30 is rotatable in a direction perpendicular to a direction where the image display apparatus main body 100 projects an image, thereby allowing the projection angle of the projecting lens 4 to be adjusted. Consequently, it is possible to prevent an image projected by the projecting lens 4 from reflecting on an installment surface of the image display apparatus 10.

The image display apparatus 10 may be used as a single body. Alternatively, the image display apparatus 10 may be incorporated in a PC (Personal Computer) 300 as an electronic device as shown in Fig. 4. The image display apparatus 10 can be ejected or retracted with respect to the PC 300 as needed, and the image display apparatus 10 can project displayed output of the PC 300 to a screen, a wall, and the like. Consequently, it is possible to easily project displayed output of the PC 300 to a large screen without connecting a separate image display apparatus to the PC 300 via a wire and the like.

When the image display apparatus 10 is incorporated into the PC 300 (electronic device), the tilted portion 30 is arranged to protrude outside the PC 300 so as to freely rotate. Thus, at least a part of the fixed portion 20 needs to be fixed to the PC 300, and an opposite surface side of the side surface 31 may be fixed to the PC 300. However, in order to secure the air inlet ports 21 a, it is preferable that an opposite surface side of the side surface 32 is fixed to the PC 300.

Examples of the electronic device other than the PC 300 include a television, a display, an optical disc player, a portable optical disc player, and the like. Anything to project an image is included. Alternatively, in order to project information of an electrical device (for example, home electrical appliance such as a refrigerator or a washing machine) to the outside, the image display apparatus 10 may be incorporated into such an electrical device.

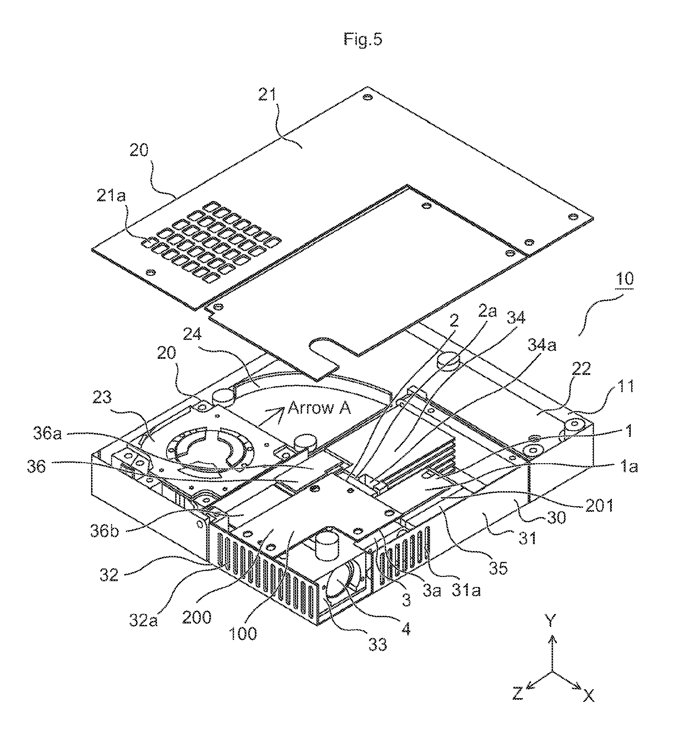

Next, the summary of an internal configuration of the image display apparatus 10 will be explained with reference to Fig. 5. Fig. 5 is a schematic perspective view illustrating the internal configuration of the image display apparatus according to the embodiment 1 of the present invention. Each member will be explained below.

A control base 22 performs control to the image display apparatus 10. The control base 22 also serves as a controller of the image display apparatus main body 100 and a cooling fan 23 described below, and serves as an interface portion to electrically connect the PC 300 and the image display apparatus main body 100. Electric source is supplied from the control base 22 to the image display apparatus main body 100 and the cooling fan 23.

The cooling fan 23 takes in and releases air to promote heat dissipation inside the image display apparatus 10. The cooling fan 23 rotates when electric source is supplied. The cooling fan 23 introduces air from the outside of the image display apparatus 10 through the plurality of air inlet ports 21 a side, and releases air in a direction of arrow A. The following explanation will be made considering the air released from the cooling fan 23 as cooling air.

A guide 24 is provided on the control base 22 so as to guide the cooling air in a predetermined direction. Here, the guide 24 guides the cooling air released in a direction of arrow A to a fin 34 described below.

The fin 34 is composed of a member having high thermal conductivity. The fin 34 serves as a heat dissipating portion of the red color laser light source apparatus 2, and aids heat dissipation of the red color laser light source apparatus 2. Since the fin 34 is provided adjacent to the red color laser light source apparatus 2 and the tilted portion 30, heat generated from the red color laser light source apparatus 2 is transferred to the fin 34. The fin 34 is cooled by the cooling air released from the cooling fan 23 via the guide 24, and dissipates heat to the tilted portion 30. With this, it is possible to promote the heat dissipation of the red color laser light source apparatus 2. Also, the fin 34 is configured to increase the heat dissipation area (surface area), which makes it possible to receive the cooling air from the cooling fan 23 with a larger area. Consequently, the heat dissipation efficiency of the red color laser light source apparatus 2 can be improved. Here, a red color laser holder 2a and the fin 34 are separate. However, it is preferable that the red color laser holder 2a and the fin 34 are integrally formed so as to improve the thermal conductivity. The red color laser light source apparatus 2 can easily perform heat dissipation by integrally forming the red color laser holder 2a and the fin 34.

A recessed portion 34a is provided to cause a feed terminal of a semiconductor laser accommodated in the red color laser holder 2a to protrude outside of the red color laser holder 2a. Also, the recessed portion 34a ensures a space to connect the feed terminal and a feeder line wired from the control base 22. Although the recessed portion 34a may be penetrated, it is preferable that the recessed portion 34a is not penetrated and keeps a minimum recess to increase the contact area between the red color laser holder 2a and the fin 34. The red color laser holder 2a can transfer heat to the fin 34 more effectively by increasing the contact area.

A fin 35 is composed of a member having high thermal conductivity. The fin 35 serves as a heat dissipating portion of the green color laser light source apparatus 1, and aids heat dissipation of the green color laser light source apparatus 1. The fin 35 contacts the side surface 201 b opposite to the side surface 201 a of the protrusion 201 that contacts the fixing plane 1b of the green color laser light source apparatus 1, and the fin 35 also contacts the tilted portion 30. Consequently, heat generated from the green color laser light source apparatus 1 is transferred to the fin 35 and the tilted portion 30. The fin 35 is also configured to increase the heat dissipation area (surface area), which makes it possible to improve the heat dissipation efficiency of the green color laser light source apparatus 1. With the above configuration, the heat dissipation of the green color laser light source apparatus 1 can be promoted. Here, the protrusion 201 and the fin 35 are separate. However, it is preferable that the protrusion 201 and the fin 35 are integrally formed so as to improve the thermal conductivity. The green color laser light source apparatus 1 can easily perform heat dissipation by integrally forming the protrusion 201 and the fin 35.

A fin 36 is composed of a member having high thermal conductivity. The fin 36 serves as a heat dissipating portion of the image display apparatus main body 100 (in particular, the laser light source apparatuses 1-3 of the respective colors), and aids heat dissipation of the image display apparatus main body 100. The fin 36 has a multilevel stair-step structure which has a higher step portion 36a and a lower step portion 36b. The lower step portion 36b is provided to ensure a space to electrically connect to the image display apparatus main body 100 (for example, the spatial modulation element 9). By connecting the spatial modulation element 9 and the control base 22, the control base 22 can control the spatial modulation element 9. With this, it is possible to form an image to be output by the PC 300. In sum, the image display apparatus main body 100 can project an image to be output by the PC 300.

A whole surface of the higher step portion 36a on the image display apparatus main body 100 side contacts the main body case 200. On the other hand, at least a part of a surface of the lower step portion 36b on the image display apparatus main body 100 side contacts the main body case 200, and the contact part of the surface of the lower step portion 36b is on the higher step portion 36a side.

The reason for limiting the surface of the lower step portion 36b that contacts the main body case 200 is to prevent the spatial modulation element 9 from being cooled actively. Regarding the spatial modulation element 9, it is not sufficient to simply keep the temperature low as is the case with the laser light source apparatuses 1-3 of the respective colors. It is preferable to keep the temperature within a predetermined range. For example, when the temperature of the spatial modulation element 9 reaches 50 °C or more, there is likelihood that burn-in, not to be projected, will occur to an image projected by the projecting lens 4. Also, when the temperature of the spatial modulation element 9 is around 5-10 °C, the reflectivity of the spatial modulation element 9 will be deteriorated. This affects the quality of a projected image.

Thus, in order not to actively cool the spatial modulation element 9 provided in a negative direction of arrow X with respect to the projecting lens 4, the image display apparatus 10 according to the present embodiment has a configuration where the lower step portion 36b does not contact at least a part of the main body case 200 opposing the spatial modulation element 9. With this, it is possible to prevent the spatial modulation element 9 from being cooled more than necessary.

Here, the main body case 200 and the fin 36 are separate. However, it is preferable that the main body case 200 and the fin 36 are integrally formed so as to improve the thermal conductivity. The main body case 200, that is, the laser light source apparatuses 1-3 of the respective colors can easily perform heat dissipation by integrally forming the main body case 200 and the fin 36.

Heat dissipation of the laser light source apparatuses 1-3 of the respective colors also utilizes the main body case 200 and the fin 36. Since the laser holders 1a-3a of the respective colors contact the main body case 200, heat generated from the laser light source apparatuses 1-3 of the respective colors is transferred to the main body case 200. Further, since the fin 36 contacts the main body case 200, the fin 36 performs heat dissipation of the main body case 200. Also, both of the higher step portion 36a and the lower step portion 36b contact the tilted portion 30. Accordingly, the fin 36 can also perform heat dissipation to the tilted portion 30.

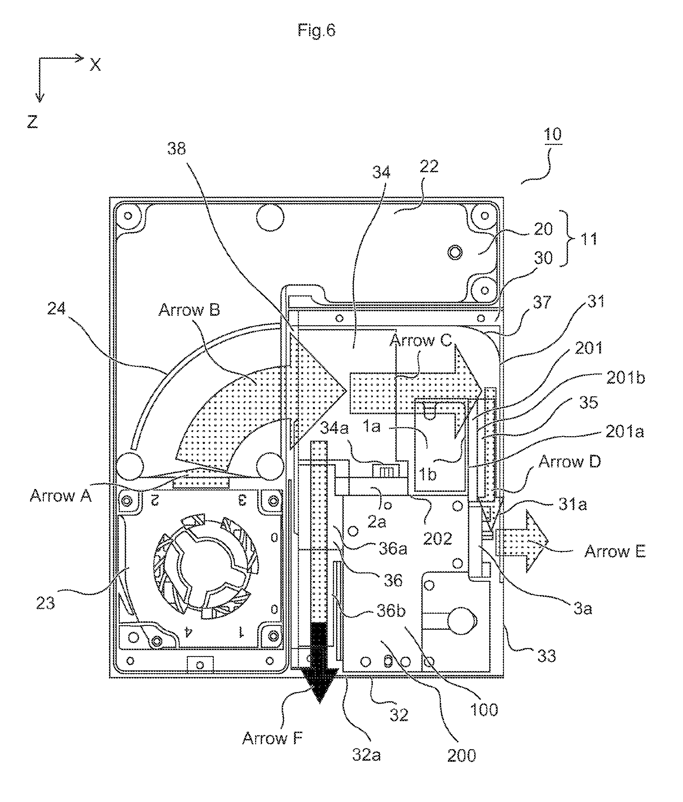

Next, an explanation will be made on a cooling air passage (heat dissipation passage) formed between the air inlet ports 21a, and the exhaust ports 31a and 32a with reference to Fig. 6. Fig. 6 illustrates an example of the cooling air passage of the image display apparatus according to the embodiment 1 of the present invention. Incidentally, Fig. 6 is a view obtained by seeing Fig. 5 from a negative direction of arrow Y.

The cooling air passage refers to a course of air in which air taken in from the air inlet ports 21 a travels to be exhausted from the exhaust ports 31 a and 32a. The present embodiment has first and second cooling air passages. The first cooling air passage is guided in order of arrows A, B, C, D and E, and finally exhausted from the exhaust ports 31 a. The second cooling air passage is guided in order of arrows A, B and F, and finally exhausted from the exhaust ports 32a. By cooling the heat dissipating portions of the laser light source apparatuses 1-3 of the respective colors, interposed in the two cooling air passages, with cooling air, heat dissipation of the laser light source apparatuses 1-3 of the respective colors is promoted. In sum, the temperature increase of the laser light source apparatuses 1-3 of the respective colors can be prevented. Hereinafter, the two cooling air passages will be explained.

As explained above, the cooling fan 23 releases air in a direction of arrow A. The cooling air is guided in a direction of the fin 34 by the guide 24. The cooling air passage from the cooling fan 23 to the fin 34 thus becomes as shown in arrow B, and the fin 34 is cooled.

Here, the cooling air passage is divided into a direction of arrow C and a direction of arrow F. The cooling air passage proceeding in the direction of arrow C is a first branch, and the cooling air passage proceeding in the direction of arrow F is a second branch. First, an explanation will be made on a case where the cooling air passage proceeds in the direction of arrow C (first branch).

Since the opening area of the first branch is larger than that of the second branch, the cooling air is introduced mainly in the direction of arrow C. Further, the tilted portion 30 has a guide 37 in the inside thereof, and the guide 37 guides the cooling air, introduced in the direction of arrow C, in a direction of arrow D. With this, the cooling air reaches the fin 35 and cools the fin 35. The cooling air further cools the blue color laser light source apparatus 3 provided between the projecting lens 4 and the fin 35, and is exhausted from the exhaust ports 31 a (in a direction of arrow E). The first cooling air passage is formed in this manner (in order of arrows A, B, C, D and E), and the cooling air absorbs heat of the members interposed in the first cooling air passage.

Next, an explanation will be made on a case where the cooling air passage proceeds in the direction of arrow F (second branch).

The cooling air proceeding in the direction of arrow F is cooling air to be guided to the exhaust ports 32a, and also remaining cooling air that does not proceed to the first branch having a larger opening (in the direction of arrow C). The cooling air cools the fin 36 so as to promote heat dissipation of the main body case 200. The cooling air, which has absorbed heat of the fin 36, is released from the exhaust ports 32a.

As explained above, the first cooling air passage is in order of arrows A, B, C, D and E, and the second cooling air passage is in order of arrows A, B and F. Accordingly, the cooling air flowing through the first cooling air passage cools the heat dissipating portion (fin 34) of the red color laser light source apparatus 2, the heat dissipating portion (fin 35) of the green color laser light source apparatus 1, and the heat dissipating portion (blue color laser holder 3a) of the blue color laser light source apparatus 3, in this order. The cooling air flowing through the second cooling air passage cools the fin 36 (image display apparatus main body 100). Specifically, regarding heat dissipation of the laser light source apparatuses 1-3 of the respective colors, priority is given to the red color laser light source apparatus 2, the green color laser light source apparatus 1, and the blue color laser light source apparatus 3, in this order. With this, it is possible to prevent the quality deterioration of an image in the image display apparatus 10.

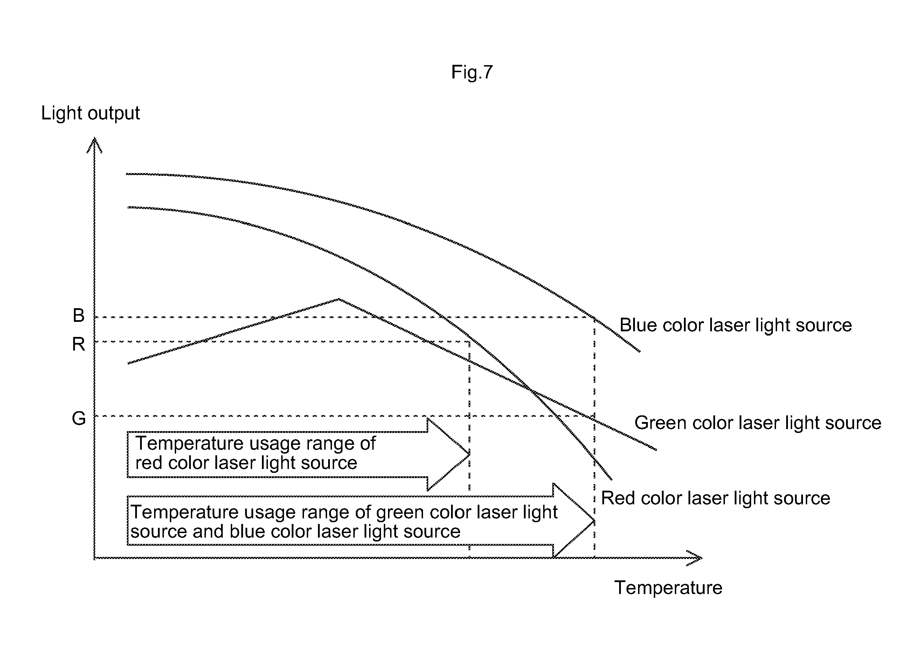

Hereinafter, the reason will be explained in detail with reference to Figs. 5 and 7. Fig. 7 illustrates a relationship between the temperature and the output of the laser light source apparatuses of the respective colors according to the embodiment 1 of the present invention.

Fig. 7 illustrates a relationship between the used temperature and the light output of the laser light source apparatuses of the respective colors according to the embodiment of the present invention. First, a more detailed explanation will be made on the reason for giving top priority to heat dissipation of the red color laser light source apparatus 2 (see Fig. 1). As described above, generally, the red color laser light source apparatus 2 has the worst temperature characteristics among the laser light source apparatuses 1-3 of the respective colors. Here, the temperature characteristics refer to characteristics showing the temperature range in which light output more than the minimum requirement of light output can be obtained in the laser light source apparatuses of the respective colors.

The laser light source apparatuses 1-3 of the respective colors have different temperature characteristics. As shown in the characteristics diagram of Fig. 7, basically, the light output of the laser light source apparatuses 1-3 of the respective colors is decreased on the high-temperature side due to increase in the temperature. In particular, the output of the red color laser light source apparatus 2 is decreased first among the laser light source apparatuses 1-3 of the respective colors. Accordingly, since the upper limit of the used temperature of the red color laser light source apparatus 2 is lower than the other laser light source apparatuses, it is preferable to give priority to prevention of temperature increase in the red color laser light source apparatus 2.

For this purpose, the fin 34 is provided in the vicinity of an opening 38 of the image display apparatus main body 100 according to the present embodiment. Specifically, the fin 34, that serves as the heat dissipating portion of the red color laser light source apparatus 2, is provided on the most upstream side among the heat dissipating portions of the laser light source apparatuses 1-3 of the respective colors interposed in the cooling air passages. With this, the cooling air guided into the tilted portion 30 cools the fin 34 before it cools the fin 35, the fin 36, and the blue color laser holder 3a. The cooling air cools the fin 34 before it absorbs heat of the fin 35, the fin 36, and other members of the tilted portion 30. Further, the fin 34 is cooled with large-volume cooling air before divided into arrow C and arrow F. By forming the cooling air passage in this manner, cooling the heat dissipating portion (fin 34) of the red color laser light source apparatus 2 is prioritized. Consequently, it is possible to preferentially prevent the decrease of output of the red color laser light source apparatus 2. The image display apparatus main body 100 can stably output images of high quality.

Next, a detailed explanation will be made on the reason for giving priority to heat dissipation of the green color laser light source apparatus 1 next to the red color laser light source apparatus 2.

Generally, the green color laser light source apparatus 1 requires the largest current value among the laser light source apparatuses 1-3 of the respective colors. As described above, the green color laser light source apparatus 1 mainly outputs green color laser light by converting infrared fundamental laser light to a half wavelength. Laser light emitted from the semiconductor laser passes through various elements (for example, SHG element) before it is converted into green color laser light. Since this causes light loss, the efficiency for converting electricity to light is worse in the green color laser light source apparatus 1 than the red color laser light source apparatus 2 and the blue color laser light source apparatus 3. In sum, the green color laser light source apparatus 1 requires a larger amount of electricity to generate a predetermined amount of output than the red color laser light source apparatus 2 and the blue color laser light source apparatus 3. The green color laser light source apparatus 1 thus has the larger amount of heat generation among the laser light source apparatuses 1-3 of the respective colors. Consequently, heat generated from the green color laser light source apparatus 1 is transferred to the protrusion 201 (i.e., transferred to the main body case 200), which may cause more temperature increase of the red color laser light source apparatus 2 and the blue color laser light source apparatus 3. In such a case, the output of the red color laser light source apparatus 2 and the blue color laser light source apparatus 3 is further decreased.

According to the present embodiment, therefore, the image display apparatus 10 is configured and the cooling air passage is formed such that priority is given to cooling the green color laser light source apparatus 1 next to the red color laser light source apparatus 2. In other words, cooling the green color laser light source apparatus 1 is given more priority than the blue color laser light source apparatus 3. The heat dissipating portion (fin 35) of the green color laser light source apparatus 1 is cooled with cooling air before absorbing heat of the blue color laser light source apparatus 3. Also, one of the reasons for guiding more cooling air to the first branch (in the direction of arrow C) is to preferentially perform heat dissipation to the green color laser light source.

Further, the image display apparatus 10 is configured such that heat of the green color laser light source apparatus 1 is not easily transferred to the other laser light source apparatuses, especially, the red color laser light source apparatus 2. The green color laser light source apparatus 1 contacts the plane 201 a of the protrusion 201, and is fixed thereto. Also, as described above, a predetermined gap is provided between the green color laser light source apparatus 1 and the plane 202. The plane 201 a where the green color laser light source apparatus 1 contacts the main body case 200 is different from the plane 202 where the red color laser light source apparatus 2 contacts the main body case 200. Specifically, the image display apparatus main body 100 of the present embodiment is configured such that the contact surface between the red color laser light source apparatus 2 and the main body case 200 is distanced from the contact surface between the green color laser light source apparatus 1 and the main body case 200. With this, it is possible to make it difficult for heat generated from the green color laser light source apparatus 1 to be transferred to the red color laser light source apparatus 2, and prevent the decrease of output of the red color laser light source apparatus 2.

Further, the protrusion 201 is provided integrally with the main body case 200 on a corner of the main body case 200. The fin 35 is provided to contact the plane 201 b opposite to the plane 201 a that contacts the fixing plane 1 b of the green color laser light source apparatus 1. Heat generated from the green color laser light source apparatus 1 is easily transferred to the fin 35 through the plane 201 b having the largest area in the protrusion 201. Heat generated from the green color laser light source apparatus 1 is thus transferred mainly to the fin 35. The green color laser light source apparatus 1 performs heat dissipation by using the fin 35 mainly. Consequently, heat from the green color laser light source apparatus 1 is prevented from transferring to the red color laser light source apparatus 2, and the temperature increase of the red color laser light source apparatus 2 is prevented. The red color laser light source apparatus 2 can therefore stably output.

In order to perform heat dissipation of the green color laser light source apparatus 1 with the fin 35 thoroughly, that is, in order not to transfer heat generated from the green color laser light source apparatus 1 to the red color laser light source apparatus 2 as much as possible, it is preferable that the protrusion 201 is a separate member from the main body case 200 or separated from the main body case 200. With this, it is possible to make it difficult for heat from the green color laser light source apparatus 1 to be transferred to the main case body 200. Further, it is possible to make it difficult for heat from the green color laser light source apparatus 1 to be transferred to the red color laser light source apparatus 2. When the protrusion 201 is separated from the main body case 200, the protrusion 201 may be fixed to the tilted portion 30, for example.

Next, a detailed explanation will be made on the heat dissipation course of the laser light source apparatuses 1-3 of the respective colors. An explanation will also be made on improvement of heat dissipation in the image display apparatus 10 of the present embodiment based on the above heat dissipation course.

Heat generated from the heat generating portion (semiconductor laser and the like that outputs infrared fundamental laser light) of the green color laser light source apparatus 1 is transferred to the green color laser holder 1a. The heat transferred to the green color laser holder 1a is released from a surface that contacts the cooling air passage, and transferred to the protrusion 201 through the fixing plane 1 b and the plane 201 a. The heat transferred to the protrusion 201 is transferred to the fin 35 through the plane 201 b and transferred to the inside of the main body case 200. Since the fin 35 is provided in the cooling air passage, the heat transferred to the fin 35 is absorbed by the cooling air, and released to the tilted portion 30. Also, since the temperature of the fin 36, cooled with the cooling air, is low, the heat transferred to the inside of the main body case 200 is easily transferred to the fin 36. The heat transferred to the fin 36 is absorbed by the cooling air, and released to the tilted portion 30.

Heat generated from the heat generating portion (semiconductor laser and the like that outputs red color laser light) of the red color laser light source apparatus 2 is transferred to the red color laser holder 2a. The heat transferred to the red color laser holder 2a is transferred to the fin 34 and the main body case 200. Since the fin 34 is provided in the cooling air passage, the heat transferred to the fin 34 is absorbed by the cooling air. The heat of the fin 34 is also released to the tilted portion 30. For the same reason as described above, the heat transferred to the main body case 200 is transferred to the fin 36, absorbed by the cooling air, and released to the tilted portion 30.

Heat generated from the heat generating portion (semiconductor laser and the like that outputs blue color laser light) of the blue color laser light source apparatus 3 is first transferred to the blue color laser holder 3a. Since the blue color laser holder 3a is provided in the cooling air passage, the heat transferred to the blue color laser holder 3a is absorbed by the cooling air. The heat transferred to the blue color laser holder 3a is also transferred to the main body case 200. For the same reason as described above, the heat transferred to the main body case 200 is transferred to the fin 36, and absorbed by the cooling air.

As described above, the laser light source apparatuses 1-3 of the respective colors have a plurality of the heat dissipation courses, and substantially the members in the heat dissipation courses are the heat dissipating portions of the laser light source apparatuses 1-3 of the respective colors. The laser light source apparatuses 1-3 of the respective colors have heat dissipation courses other than the heat dissipating portions (such as the fin 34, the fin 35, and the blue color laser holder 3a provided in the cooling air passage) that mainly perform heat dissipation, and heat dissipation is performed separately. The heat dissipation efficiency of the laser light source apparatuses 1-3 of the respective colors is improved in the manner. For example, the red color laser light source apparatus 2 performs heat dissipation by using the main body case 200 and the tilted portion 30 as well as the fin 34. Likewise, the green color laser light source apparatus 1 and the blue color laser light source apparatus 3 perform heat dissipation by using the main body case 200 and the tilted portion 30. Further, heat of the main body case 200 is dissipated by the fin 36.

As described above, the image display apparatus 10 of the present invention is configured and the cooling air passage is formed in terms of the temperature characteristics and the heat generation amount of the laser light source apparatuses 1-3 of the respective colors. With this, it is possible to prevent the image quality deterioration of the image display apparatus 10 by a long period of use. That is, the image display apparatus 10 can stably output images of high quality.

Naturally, a fin may be provided in the blue color laser holder 3a, and another fin may be provided in the negative direction of arrow Z of the green color laser holder 1 a in addition to the fin 35. The fins 34-36 do not need to contact the tilted portion 30. The configuration of the fins 34-36 may be a pinholder shape or a staged shape, and is not limited to a particular one. Also, in the present embodiment, the cooling air passage is divided into the first branch and the second branch in the fin 34. However, this division may be performed on the upstream side or the downstream side of the cooling air passage relative to the fin 34. The tilted portion 30 may be integral with the main body case 200.

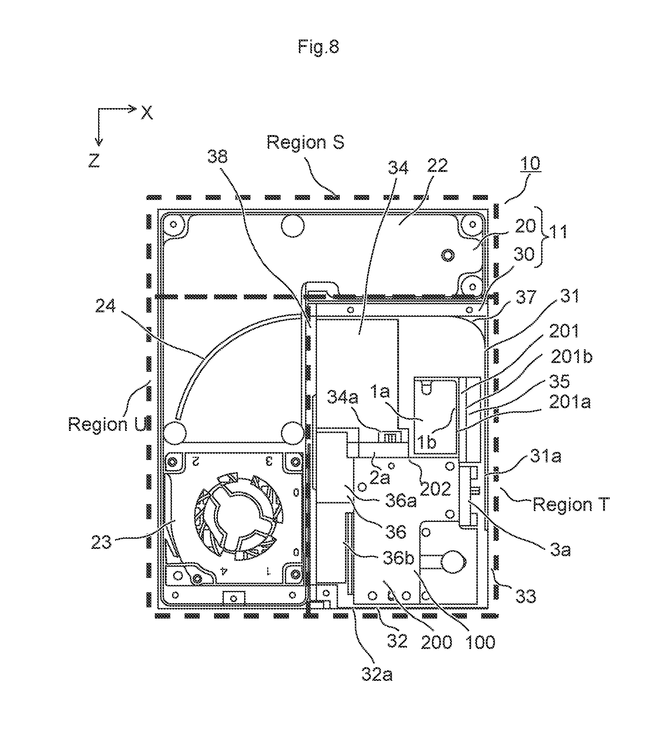

Next, Fig. 8 is used to illustrate advantages of a compact size of the image display apparatus 10. Fig. 8 illustrates the case 11 of the image display apparatus 10 according to the embodiment 1 of the present invention, where the case 11 is divided into three regions, S, T, and U. Similar to Fig. 6, Fig. 8 is a view obtained of the image display apparatus 10 from a negative direction of arrow Y.

As shown in Fig. 8, the case 11 is divided into three regions, S (first region), T (second region), and U (third region). The fixed portion 20 is divided into the regions S and U, and the case portion 11 in the region T is the tilted portion 30. Therefore, the region T can be tilted.

The image display apparatus 10 has a size that can be stored in a limited space (e.g., a space for storing an optical disc driver of the PC 300). Therefore, the image display apparatus 10 can be installed within the PC 300. When the image display apparatus 10 is not in use, the image display apparatus 10 is stored in a drive of the PC 300 by being inserted from an opposite surface of the side surface 32. When the image display apparatus 10 is in use, the image display apparatus 10 protrudes from the PC 300. At this time, at least a portion of the region S is stored and held within the PC 300.

The control base 22 is electrically connected to the PC 300, the image display apparatus main body 100 (including each of color laser light source apparatuses 1 - 3, PBS 8, spatial modulation element 9, and the like), and the cooling fan 23. Accordingly, electricity is supplied to the image display apparatus main body 100 and the cooling fan 23 from the PC 300 via the control base 22, and the image display apparatus main body 100 can project an image on the display of the PC 300 via the control base 22. Therefore, without being hard-wired outside of the PC 300, the image display apparatus main body 100 can project an image on the display of the PC 300.

The following description is based on a situation where the image display apparatus 10 is used protruding from the PC 300.

When the image display apparatus 10 is used, at least a portion of the region S is stored and held by the PC 300. Accordingly, the image display apparatus 10 is fixed by PC 300 during the use, and it is possible to maintain a parallel distance between a placement surface of the PC 300 and a fixed portion 20. In other words, the image projected by the image display apparatus 10 is inhibited from inclining against the placement surface of the PC 300. In addition, in the image display apparatus 10, the region S is provided most proximate to the PC 300. Therefore, a portion of the control base 22 is provided in the region S, thereby electrically connecting the control base 22 and the PC 300 with ease.

The region T is located in a positive direction of the arrow Z from the region S (away from the PC 300 sandwiching the region S). Therefore, when the image display apparatus 10 is in use, the region T that houses the image display apparatus main body 100 protrudes from the PC 300. Therefore, there is no obstructing object in the positive and negative directions of the arrow Y from the region T (tilted portion 30). Thus, the region T (tilted portion 30) can be rotated in a direction perpendicular to a projection direction of the image. Further, the projection port 33 is located outside the PC 300 when in use. Accordingly, the image display apparatus main body 100 can project an image from the projection port 33. Further, the projection port 33 is provided in the region T proximate to the side surface 32 away from the region S. In other words, the projection port 33 is provided closer to a surface opposite to an electric device side of the case 11, away from the region S. Accordingly, the projection port 33 is distantly provided away from the PC 300. Therefore, it is possible to inhibit a shadow of the PC 300 from interfering the image projected from the projection port 33.

The region U is located in a positive direction of the arrow Z from the region S (away from the PC 300 sandwiching the region S), as well as in a negative direction of the arrow X from the region T (away from the projection port 33 of the region T). The region U is an area of the fixed portion 20 completely protruding from the PC 300. Specifically, the cooling fan 23 and the inlet ports 21 a are positioned outside of the PC 300 so that the cooling fan 23 can take in, from the inlet ports 21 a, air outside of the image display apparatus 10. The cooling fan 23 is provided in the region U proximate to the side surface 32 away from the region S. In other words, the cooling fan 23 is provided closer to an opposite surface from an electric device side of the case 11, away from the region S. Accordingly, a space in the region U is created between the cooling fan 23 and the region S. Therefore, it is possible to utilize the space to position a portion of the control base 22 therein, which is provided as one sheet of base straddling on both the regions S and U.

Each member of the image display apparatus 10 is positioned in the regions S, T, and U as described above. Accordingly, the image display apparatus 10 can be made compact which can be stored in a limited space. Only the region T (tilted portion 30) is rotatable and houses the image display apparatus main body 100. The region U that is positioned in a negative direction of the arrow X from the region T is adjacent to the region T. The boarder between the regions T and U is provided with a hinge portion 25, around which the region T is rotated.

At the same time, both regions S and U are assigned to the fixed portion 20, therefore, the regions S and U are not separated nor one of which is tilted. Accordingly, it is possible to house the plane sheet of control base 22 straddling on both the regions S and U. Since the control base 22 is housed in two different regions, it is possible to effectively utilize the space within the case 11.

Further, since the control base 22 is provided in the region U, the cooling fan 23 provided in the same region U is positioned close to the control base 22. In other words, it is possible to electrically connect the control base 22 and the cooling fan 23 with ease. Further, the control base 22 is provided in two directions of the region T (negative direction of the arrow X and negative direction of the arrow Z). In other words, the control base 22 surrounds one corner of the region T. Thus, the control base 22 can be wired to the image display apparatus main body 100 by easily straddling the boarder between the regions S and T, or the boarder between the regions U and T. However, when the tilted portion 30 is rotated, the surface of the tilted portion 30 adjoining the region S is separated from the region S, it is preferable that the control base 22 be wired to the image display apparatus main body 100 by straddling the boarder between the regions U and T.

As described above, since the generated heat from each of the color laser light source apparatuses 1 ― 3 is dissipated, it is possible to inhibit the generated heat of the image display apparatus 10 from transferring to the PC 300 and adversely affecting the PC 300. Additionally, the positions of regions T and U may be reversed and the configurations of the regions T and U may be reversed in the horizontal direction. In other words, the projection port 33 may be provided in a location opposite from the present embodiment so that the image display apparatus 10 may project an image in a direction opposite from the projection direction shown in Fig. 4.

### Embodiment 2

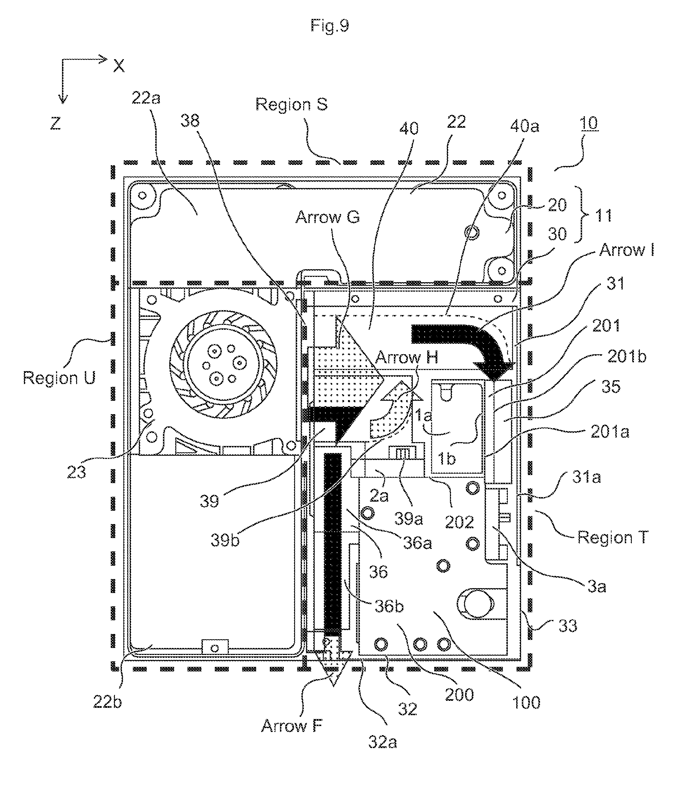

Embodiment 2 of the present invention is hereinafter described with reference to Fig. 9. Fig. 9 illustrates an example of a cooling air passage of the image display apparatus according to the embodiment 2 of the present invention. Component members having the same configuration and function as the embodiment 1 will be given the same numerical references and the detailed illustration thereof will be omitted.

The arranged location of the cooling fan 23, arrangement of and configuration of the control base, and arrangement and configuration of the fin in the embodiment 2 are different from the embodiment 1. The differences are described hereafter in detail.

As shown in Fig. 9, the cooling fan 23 is provided in an opposite direction of the arrow X away from the opening 38, and ejects cooling air in a direction of an arrow G. Therefore, in this embodiment, the guide 24 is not provided. The cooling air from the cooling fan 23 directly cools the fin 34. Although not shown in the drawing, the air inlet ports 21 a is provided on the upper surface 21 of the fixed portion 20, which is in a positive direction of the arrow Y from the cooling fan 23.

Further, in the present embodiment, the control base 22 is not configured with one base, but two bases (control bases 22a and 22b), which are electrically connected to each other with the cooling fan 23 and the fixed portion 20 in between. In other words, the control bases 22a and 22b are physically two separate bases, but electrically one base. Therefore, the separated control base 22b is supplied with electricity from an electric device such as the PC 300 via the control base 22a. As described above, the control base 22 is an electrically one base. Therefore, similar to the embodiment 1, the control base 22 is configured to straddle on both the regions S and U.

Further, the fin 39 contacts the red color laser holder 2a. In other words, the fin 39 is a heat dissipating portion of the red color laser light source apparatus 2, similar to the fin 34. As shown in Fig. 9, the fin 39 is configured smaller than the fin 34. In the present embodiment, the fin 40 is provided utilizing a space created by providing the fin 39 instead of the fin 34. The fin 40 contacts the tilted portion 30. In addition, the fin 39 has a recessed portion 39a, similar to the recessed portion 34a.

The fin 39 has a multilevel stair-step structure so as to increase the surface area that dissipates heat. The fin 39 also houses a guide 39b in the internal stair-step structure as shown in a dotted line in Fig. 9, in order to configure a cooling air path. Similarly, the fin 40 has a multilevel stair-step structure so as to increase the surface area. The fin 40 also houses a guide 40a in the internal stair-step structure as shown in a dotted line in Fig. 9, in order to configure a cooling air path.

With the image display apparatus 10 of the present embodiment configured as described above, cooling air discharged from the cooling fan 23 in the direction of the arrow G mainly proceeds to a straightly extending direction of the arrow G (first branch), white a portion of the air branches off to a direction of the arrow F (second branch). At least a portion of the cooling air proceeded in the straightly extending direction of the arrow G is led to the direction of the arrow H by the guide 39b. Accordingly, the cooling air led to the direction of the arrow H is joined with the cooling air straightly flowing from the cooling fan 23 and is led to the direction of the guide 40a. Therefore, the cooling air led by the guide 40a is directed to the direction of the arrow I. Accordingly, the cooling air cools heat dissipating portions of the green color and blue color laser light source apparatuses 1 and 3, and is ejected from the exhaust ports 31 a. Meanwhile, the cooling air proceeded in the direction of the arrow F cools the fin 36 and is ejected from exhaust ports 32a. The cooling air passage is thusly formed, which makes it possible in the present embodiment to obtain an effect similar to the embodiment 1.

As illustrated in the embodiment 1, the heat generated in each of the color laser light source apparatuses 1 - 3 is transferred to the tilted portion 30 in the end. The fin 40 is not in contact with each of the color laser light source apparatuses 1 ― 3 and receives a great portion of the cooling air. Accordingly, the fin 40 is maintained cool. Specifically, in the present embodiment, the tilted portion 30 can release heat to the fin 40. Accordingly, it is possible to improve heat releasability of the image display apparatus.

Further, in the present embodiment, air is directly sent into the tilted portion 30 without the need of a guide 24. Therefore, it is possible to inhibit the guide 24 from interfering with the cooling air (for example, cooling air remaining in the fixed portion 20 instead of moving to the tilted portion 30). Thus, the cooling air is securely sent to the tilted portion 30.

Further, unlike in the embodiment 1, the present invention has a configuration where the cooling air ejected from the cooling fan 23 is directly sent to the tilted portion 30 without passing through the control base 22. Therefore, in the present embodiment, it is possible to cool the fin 39 without absorbing the heat generated in the control base 22. Accordingly, it is possible to more effectively cool the fins 39 and 40.

In addition, embodiments 1 and 2 can be combined as appropriate.

An exemplary image display apparatus according to the present invention has: a case that is distinguished into a plurality of regions and has a projection port; an image display apparatus main body that projects an image from the projection port; and a controller that electrically connects to the image display apparatus main body and to an external electronic device, and is positioned so as to straddle on the plurality of regions. The case includes: a first region that houses a first portion of the controller and is held by the electronic device at least at one portion of the region; a second region that is positioned away from the electronic device so as to sandwich the first region and houses the image display apparatus main body; and a third region that is positioned away from the projection port and away from the electronic device so as to sandwich the first region, and houses a second portion of the controller.

Accordingly, the image display apparatus main body and the electronic device are electrically connected via the controller. Thus, electricity is supplied from the electronic device to the image display apparatus main body. Further, the electronic device can project an image from the image display apparatus main body via the controller. Therefore, without being hard-wired outside to the electronic device, an image to be displayed by the electronic device can be projected.

In addition, since the electronic device holds at least a portion of the first region, the image display apparatus is held by the electronic device. The second and third regions positioned beyond the first region away from the electronic device protrude outside the electronic device. Therefore, image display apparatus main body provided in the second region can project an image from the projection port of the second region.

The controller is positioned so as to straddle on the first and third regions, thereby effectively utilizing the space inside the image display apparatus. Accordingly, the image display apparatus can be made compact.

Another aspect of above exemplary image display apparatus may be to adjust the projection angle of the image display apparatus, i.e., to adjust the position if the image to be projected. Accordingly, the second region of the case may rotate in a direction perpendicular to a direction to which the image display apparatus projects an image.

Another aspect of the above exemplary image display apparatus may be to distance the projection port and the electronic device so that the image display apparatus is inhibited from projecting an image on the electronic device. Specifically, when the image display apparatus projects an image on a screen or the like, the electronic device would then be inhibited from casting a shadow on the image. Accordingly, the projection port may be provided in the second region close to a surface opposite to an electric device side of the case, away from the first region.

Another aspect of the above exemplary image display apparatus may be to promote heat dissipation of the image display apparatus main body, specifically, to inhibit an adverse effect on the electronic device caused by generated heat of the image display apparatus main body transferring to the electronic device. Accordingly, the case may include: an air inlet port; an exhaust port; and a cooling air passage formed by connecting the air inlet port and the exhaust port within the case. Further, at least one portion of a heat dissipating portion of the image display apparatus main body may be positioned in the cooling air passage.

Another aspect of the above exemplary image display apparatus may be to promote heat dissipation of the image display apparatus main body, by having an air blower that intakes air from the air inlet port and releasing the air to the cooling air passage. Since the air blower and the air inlet port may be provided in the third region, the air blower may take in the air from outside the image display apparatus. Accordingly, the image display apparatus may include: an air blower provided in the cooling air passage and is housed in the third region, and wherein the air inlet port is provided in a direction perpendicular to a surface direction of the air blower.

Another aspect of the above exemplary image display apparatus may be to secure a space in the third region toward the first region side, so that the controller can utilize the space and be positioned straddling on the first and third regions. Accordingly, the air blower may be provided in the third region close to a surface opposite to an electric device side of the case, away from the first region.

A further exemplary image display apparatus of the present invention comprises: a case that is distinguished into a plurality of regions and has a projection port, an air inlet port, and an exhaust port; an image display apparatus main body that projects an image from the projection port; a cooling air passage that is formed by connecting the air inlet port and the exhaust port in the case; a heat dissipating portion at least a portion of which is positioned in the cooling air passage and dissipates heat of the image display apparatus main body and; a controller that electrically connects to the image display apparatus main body and to an external electronic device, and is positioned so as to straddle on the plurality of regions, the case comprising: a first region that houses a first portion of the controller and is held by the electronic device at least at one portion of the region; a second region that is positioned away from the electronic device so as to sandwich the first region, rotates in a direction perpendicular to a direction to which an image is projected, houses the image display apparatus main body, and has the projection port close to a surface opposite to an electric device side of the case, away from the first region; and a third region that is positioned to form a key shape together with the first region so as to cover one corner of the second region, and houses a second portion of the controller.

In particular, such exemplary image display apparatus may comprises an air blower provided in the cooling air passage and is housed in the third region, and wherein the air inlet port is provided in a direction perpendicular to a surface direction of the air blower.

Even more specific, such particular exemplary image display apparatus may be arranged such that the air blower is provided in the third region close to a surface opposite to an electric device side of the case, away from the first region.

A yet further exemplary image display apparatus of the present invention comprises: a case that is distinguished into a plurality of regions and has a projection port, an air inlet port, and an exhaust port; an image display apparatus main body that projects an image from the projection port; and a controller that electrically connects to the image display apparatus main body and to an external electronic device, and is positioned so as to straddle on the plurality of regions, the case comprising: a first region that houses a first portion of the controller and is held by the electronic device at least at one portion of the region; a second region that is positioned away from the electronic device so as to sandwich the first region, and houses the image display apparatus main body; and a third region that is positioned to form a key shape together with the first region so as to cover one corner of the second region, and houses a second portion of the controller.

It is noted that the foregoing examples have been provided merely for the purpose of explanation and are in no way to be construed as limiting of the present invention. While the present invention has been described with reference to exemplary embodiments, it is understood that the words which have been used herein are words of description and illustration, rather than words of limitation. Changes may be made, within the purview of the appended claims, as presently stated and as amended, without departing from the scope and spirit of the present invention in its aspects. Although the present invention has been described herein with reference to particular structures, materials and embodiments, the present invention is not intended to be limited to the particulars disclosed herein; rather, the present invention extends to all functionally equivalent structures, methods and uses, such as are within the scope of the appended claims.

The present invention is not limited to the above described embodiments, and various variations and modifications may be possible without departing from the scope of the present invention.

## Claims

1. An image display apparatus (10) comprising:
an image display apparatus main body (100) that is adapted for projecting an image;
a controller (22) that is adapted for controlling the image display apparatus main body; and
a case (11) that houses both the image display apparatus main body (100) and the controller (22) and that has an inlet port (21a) and an exhaust port (31 a, 32a), with a cooling air passage being formed by connecting the inlet port (21 a) and the exhaust port (31 a, 32a),
wherein the image display apparatus main body (100) is adapted for receiving electric source from an external electronic device (300) via the controller (22), and
wherein the case (11) is adapted for being held by the electronic device (300) in a manner that at least both the image display apparatus main body (100) and the exhaust port (31 a, 32a) are positioned away from the electronic device (300).

2. The image display apparatus according to claim 1,
wherein the case is distinguished into a plurality of regions and the controller is positioned so as to straddle on the plurality of regions, and
wherein the case includes:
a first region (S) that houses a first portion of the controller and that is held by the electronic device in at least at one portion of the region;
a second region (T) that is positioned away from the electronic device so as to sandwich the first region and that houses the image display apparatus main body; and
a third region (U) that is positioned away from the electronic device so as to sandwich the first region and that houses a second portion of the controller.

3. The image display apparatus according to claim 2, wherein the second region of the case is adapted for rotating in a direction perpendicular to an image projection direction of the image display apparatus.

4. The image display apparatus according to claim 2, wherein the case further has a project portion to project an image, and the projection port is provided in the second region close to a surface opposite to an electronic device side of the case, away from the first region.

5. The image display apparatus according to claim 1, further comprising:
a heat dissipating portion (34, 35, 36) that dissipates heat of the image display apparatus main body,
wherein at least one portion of the heat dissipating portion of the image display apparatus main body is positioned in the cooling air passage.

6. The image display apparatus according to claim 2, further comprising:
an air blower provided in the cooling air passage and is housed in the third region,
wherein the air inlet port is provided in a direction perpendicular to a surface direction of the air blower.

7. The image display apparatus according to claim 6, wherein the air blower is provided in the third region close to a surface opposite to an electronic device side of the case, away from the first region.

8. The image display apparatus according to claim 1, further comprising:
a heat dissipating portion at least a portion of which is positioned in the cooling air passage and which is adapted for dissipating heat of the image display apparatus main body,
wherein the case is distinguished into a plurality of regions and further has a projection port to project an image, and the controller is positioned so as to straddle on the plurality of regions, and
wherein the case includes:
a first region that houses a first portion of the controller and that is held by the electronic device in at least at one portion of the region;
a second region that is positioned away from the electronic device so as to sandwich the first region, that is adapted for rotating in a direction perpendicular to a direction to which an image is projected, that houses the image display apparatus main body, and that has the projection port close to a surface opposite to an electronic device side of the case, away from the first region; and
a third region that is positioned to form a key shape together with the first region so as to cover one corner of the second region, and houses a second portion of the controller.

9. The image display apparatus according to claim 8, further comprising:
an air blower provided in the cooling air passage and is housed in the third region,
wherein the air inlet port is provided in a direction perpendicular to a surface direction of the air blower.

10. The image display apparatus according to claim 9, wherein the air blower is provided in the third region close to a surface opposite to an electronic device side of the case, away from the first region.

11. The image display apparatus according to claim 1,
wherein the case is distinguished into a plurality of regions and the controller is positioned so as to straddle on the plurality of regions, and
wherein the case includes:
a first region that houses a first portion of the controller and that is held by the electronic device in at least at one portion of the region;
a second region that is positioned away from the electronic device so as to sandwich the first region and that houses the image display apparatus main body; and
a third region that is positioned to form a key shape together with the first region so as to cover one corner of the second region and that houses a second portion of the controller.
